# EUROPEAN PATENT APPLICATION

(11) **EP 3 264 581 A1**
(43) Date of publication of application: **03.01.2018**
(21) Application number: 16755346.0
(22) Date of filing: 19.02.2016
(51) Int. Cl.: H02M 3/28

(54) **SEMICONDUCTOR DEVICE FOR CONTROLLING POWER SOURCE**

(30) Priority: 23.02.2015 JP 2015032444
(71) Applicant: Mitsumi Electric Co., Ltd., Tama-Shi, Tokyo 206-8567 (JP)
(72) Inventor: MATSUDA, Hiroki, Tama-shi Tokyo 206-8567 (JP); MURATA, Yukio, Tama-shi Tokyo 206-8567 (JP)
(74) Representative: Grünecker Patent- und Rechtsanwälte PartG mbB
(86) International application number: PCT/JP2016/054793
(87) International publication number: WO 2016/136600

(57) **Abstract**

The problem addressed by the present invention is to detect short-circuiting in an auxiliary winding by means of a semiconductor device for controlling a power source to enable halting switching operations of the power source device. This semiconductor device for controlling a power source is provided with: a high-voltage input start-up terminal into which an AC input voltage is inputted; a power source terminal into which is inputted a voltage induced by the auxiliary winding of a transformer; a switch means which is provided between the high-voltage input start-up terminal and the power source terminal; a power source voltage control circuit which monitors the voltage of the power source terminal and performs control to turn ON the switch means when said voltage is less than or equal to a first voltage value and to turn OFF the switch means when said value has reached a second voltage value; a state control circuit which controls switching ON and OFF the switch means on the basis of the voltage of the power source terminal such that the voltage of the power source terminal is within a voltage range narrower than the voltage range between the first voltage value and the second voltage value; and an auxiliary winding short-circuit detection circuit which detects short-circuits in the auxiliary winding. If a short-circuit is detected in the auxiliary winding, then operation of the ON/OFF control signal generation circuit is stopped and a state control circuit is activated.

## Description

### TECHNICAL FIELD

The present invention relates to a semiconductor device for power supply control, and particularly to a technique effectively used for a control semiconductor device that forms an insulated direct-current power supply device provided with a transformer for voltage conversion.

### BACKGROUND ART

Examples of direct-current power supply devices include an AC-DC converter which is structured by a diode bridge circuit that rectifies an alternating-current power supply and an insulated DC-DC converter that steps down the direct-current voltage rectified in the diode bridge circuit to convert the voltage into a direct-current voltage with a desired potential. One known example of such an AC-DC converter is a switching power supply device in which a switching element connected in series with a primary-side winding wire of a transformer for voltage conversion is turned on or off by a PWM (pulse width modulation) control method, aPFM (pulse frequencymodulation) control method, or the like, to control the current flowing in the primary-side winding wire, so that the voltage induced by a secondary-side winding wire is controlled indirectly.

In some switching-control type AC-DC converters, a transformer including an auxiliary winding wire is used and the voltage obtained by rectifying and smoothing the voltage induced by the auxiliary winding wire when current flows intermittently in a primary-side winding wire is supplied as an operational voltage to a power supply control circuit (IC) (see Patent Literature 1).

### CITATION LIST

### PATENT LITERATURES

- Patent Literature 1:: JP 2014-082831 A
- Patent Literature 2:: JP 2008-253032 A

### SUMMARY OF INVENTION

### PROBLEM TO BE SOLVED BY INVENTION

Incidentally, as described above, in the insulated direct-current power supply device in which the transformer including the auxiliary winding wire is used, if the auxiliary winding wire is short-circuited, the power supply voltage is not supplied to the power supply control circuit and the normal control operation cannot be performed.

Note that according to the suggested invention (see Patent Literature 2), in the case where the insulated direct-current power supply device including the transformer provided with the auxiliary winding wire has a circuit for detecting the short-circuiting of the auxiliary winding wire, when the circuit has detected the short-circuiting of the auxiliary winding wire, the switching operation is stopped.

However, in the self-excitation type direct-current power supply device that does not incorporate the oscillation circuit for switching control according to the invention disclosed in Patent Literature 2, in the so-called zero current detection type AC-DC converter that controls turning on of the switching element upon detecting the timing when the current has stopped flowing in the auxiliary winding wire, the switching operation is stopped upon detecting the short-circuiting of the auxiliary winding wire on the basis of the voltage obtained by dividing the input voltage, the current detection voltage CS, and the voltage auxiliary winding wire voltage. Therefore, the target and the detection method are different from those of the present invention.

Inaddition, the power supply control circuit (IC) examined by the present inventors is provided with a high-voltage input start terminal to which the voltage before being rectified in a diode bridge circuit of the AC power supply is applied, and when the AC input is supplied, the power supply control circuit (IC) can operate with the voltage from this high-voltage input start terminal HV. Therefore, if the auxiliary winding wire is short-circuited to stop the supply of voltage from the auxiliary winding wire side to the IC power supply terminal, a starting circuit (start circuit) provided between the high-voltage input start terminal and the power supply terminal operates and when the voltage has reached a certain voltage level, current is supplied to a capacitor (condenser) connected to the IC power supply terminal to supply the voltage to the IC power supply terminal. Then, the current is blocked and the IC is operated with the voltage charged in the capacitor.

If the auxiliary winding wire is short-circuited to stop the supply of current from the high-voltage input start terminal, only the voltage charged in the capacitor corresponds to the power supply voltage of the IC. Then, as this voltage is discharged by the consumption current along with the IC operation, the voltage is decreased. When the power supply voltage has decreased to a certain voltage level, the starting circuit is turned on to start to supply current from the high-voltage input start terminal to the capacitor connected to the IC power supply terminal, thereby boosting the voltage of the IC power supply terminal. Subsequently, this operation is repeated.

Therefore, if the auxiliary winding wire is short-circuited, it may happen that the power supply device is overloaded and large current flows in the transformer and the auxiliary winding wire and in this case, the power supply device may generate heat unless the switching operation of the power supply device is stopped.

The present invention has been made in view of the above circumstances, and an object is to provide an insulated power supply device including a transformer, in which in the occurrence of the short-circuiting of an auxiliary winding wire, a semiconductor device for power supply control detects the short-circuiting of the auxiliary winding wire and stops the switching operation of the power supply device, so that the heat generation of the power supply device is prevented.

### SOLUTION TO PROBLEM

In order to achieve the above object, there is provided a semiconductor device for power supply control that generates and outputs a driving pulse for controlling turning on or off of a switching element, which supplies current intermittently to a primary-side winding wire of a transformer for voltage conversion, by an input of voltage in proportion to the current flowing in the primary-side winding wire of the transformer and an output voltage detection signal from a secondary side of the transformer, the semiconductor device including:
an on/off control signal generation circuit which generates a control signal for controlling turning on or off of the switching element;
a high-voltage input start terminal to which voltage of AC input is input;
a power supply terminal to which voltage induced by an auxiliary winding wire of the transformer is input;
a switching means provided between the high-voltage input start terminal and the power supply terminal;
a power supply voltage control circuit which monitors voltage of the power supply terminal and performs controlling to turn on of the switching means when the voltage is less than or equal to a first voltage value that is predetermined, and performs controlling to turn off of the switching means when the voltage of the power supply terminal has reached a second voltage value higher than the first voltage value;
a state control circuit which controls turning on or off of the switching means on the basis of the voltage of the power supply terminal so that the voltage of the power supply terminal comes in a voltage range narrower than a voltage range from the first voltage value to the second voltage value; and
an auxiliary winding wire short-circuiting detection circuit which detects a short-circuiting of the auxiliary winding wire, wherein
when the auxiliary winding wire short-circuiting detection circuit has detected the short-circuiting of the auxiliary winding wire, by a signal output from the auxiliary winding wire short-circuiting detection circuit, an operation of the on/off control signal generation circuit is stopped and the state control circuit is set to an operation state.

In the aforementioned structure, if the auxiliary winding wire of the transformer is short-circuited, the state control circuit (latch stop control circuit) that controls the voltage of the power supply terminal (VDD) so as to be in a second voltage range (for example, 12 V to 13 V) is operated. Therefore, it is possible to prevent the heat generation of the power supply device caused when the IC repeats the operation as follows for a long time: when the operation of the signal generation circuit (driver) stops, the auxiliary winding wire voltage decreases; this decrease causes the starting circuit (start circuit) to operate to charge the capacitor connected to the power supply terminal (VDD); the voltage of the power supply terminal is increased, and the increased voltage causes the internal regulator to operate; and the charges in the capacitor to which the voltage from the auxiliary winding wire (short-circuiting) is not supplied are consumed and the voltage of the power supply terminal decreases again so that the voltage of the power supply terminal (VDD) is controlled to be in a first voltage range (for example, 6.5 V to 21 V).

It is preferred that the auxiliary winding wire short-circuiting detection circuit monitors an on/off control signal of the switching means output from the power supply voltage control circuit and determines that the auxiliary winding wire is short-circuited when the switching means repeats an on/off operation successively a predetermined number of times.

Therefore, if the auxiliary winding wire is short-circuited, the operation of the signal generation circuit (driver) can be stopped certainly and quickly and moreover, the state control circuit (the latch stop control circuit) that controls the voltage of the power supply terminal (VDD) so as to be in the second voltage range (for example, 12 V to 13 V) can be operated.

In addition, it is preferred that the semiconductor device for power supply control includes:
a high-voltage input monitoring circuit which is connected to the high-voltage input start terminal and monitors voltage of the high-voltage input start terminal; and
a discharging means which is connected in series with the switching means between the high-voltage input start terminal and a ground point, wherein
when the high-voltage input monitoring circuit has detected that a time for which the voltage of the high-voltage input start terminal is not lower than a predetermined voltage valuecontinuedforapredeterminedperiod, thedischargingmeans is turned on.

The discharging means that is connected in series with the switching means is provided between the high-voltage input start terminal and the ground point. Thus, when the plug is pulled out, the charges remaining in the X condenser can be discharged quickly without increasing the number of external terminals, that is, without increasing the chip size largely. In addition, if the short-circuiting of the auxiliary winding wire is detected, the latch stop control circuit is operated without stopping the operation of the IC; therefore, the user who recognizes the stop of the power supply may pull out the plug from the outlet, but at that time, the discharging circuit can be operated to quickly discharge the X condenser.

Further, it is preferred that the semiconductor device for power supply control includes:
a current detection terminal to which voltage is proportion to the current flowing in the primary-side winding wire of the transformer is input; and
a current abnormality detection circuit which detects an abnormal state by monitoring a state of the current detection terminal, wherein
when the abnormality detection circuit has detected an abnormality of the current detection terminal, by a signal output from the abnormality detection circuit, a signal generation operation of the on/off control signal generation circuit is stopped and the state control circuit is set to an operation state.

Therefore, even if the current detection terminal is opened, the state control circuit (the latch stop control circuit) is operated to avoid the restarting of the power supply device and the operation of the signal generation circuit (driver) is stopped; therefore, the heat generation from the power supply can be prevented. In addition, even when the auxiliary winding wire is short-circuited or the current detection terminal is opened, the common state control circuit (latch stop control circuit) is operated, so that the increase in circuit scale along with the addition of the latch stop function can be suppressed.

### ADVANTAGEOUS EFFECTS OF INVENTION

According to the present invention, the following effect can be obtained in the control semiconductor device of the insulated direct-current power supply device that includes the transformer for voltage conversion and that controls the output by turning on or off the current flowing in the primary-side winding wire: if the auxiliary winding wire is short-circuited, the short-circuiting of the auxiliary winding wire is detected in the semiconductor device for power supply control and the switching operation of the power supply device is stopped, so that the heat generation from the power supply device can be prevented.

### BRIEF DESCRIPTION OF DRAWINGS

[FIG. 1] FIG. 1 is a circuit structure diagram illustrating one embodiment of an AC-DC converter corresponding to an insulated direct-current power supply device according to the present invention.
[FIG. 2] FIG. 2 is a block diagram illustrating a structure example of a primary-side switching power supply control circuit (power supply control IC) of a transformer in the AC-DC converter in FIG. 1.
[FIG. 3] FIG. 3 shows waveform diagrams illustrating the change of voltage in each part of a power supply control IC in an example.
[FIG. 4] FIG. 4 is a characteristic diagram illustrating the relation between feedback voltage VFB and switching frequency in the power supply control IC in the example.
[FIG. 5] FIG. 5 is a circuit structure diagram illustrating a structure example of an auxiliary winding wire short-circuiting detection circuit and a latch stop control circuit in the power supply control IC according to the example.
[FIG. 6] FIG. 6 is a timing chart expressing the operation timing when the short-circuiting of the auxiliary winding wire is detected in the auxiliary winding wire short-circuiting detection circuit and the latch stop control circuit in FIG. 5.
[FIG. 7] FIG. 7 is a circuit structure diagram illustrating a more specific circuit structure example of the auxiliary winding wire short-circuiting detection circuit and the latch stop control circuit in FIG. 5.
[FIG. 8] FIG. 8 is a circuit structure diagram illustrating a structure example of a discharging circuit in the power supply control IC according to the example.
[FIG. 9] FIG. 9 is a timing chart expressing the operation timing when discharging is performed by the discharging circuit in FIG. 8.
[FIG. 10] FIG. 10 is a circuit structure diagram illustrating a more specific circuit structure example of the discharging circuit in FIG. 8.

### EMBODIMENTS FOR CARRYING OUT INVENTION

A preferred embodiment of the present invention will hereinafter be described with reference to the drawings.

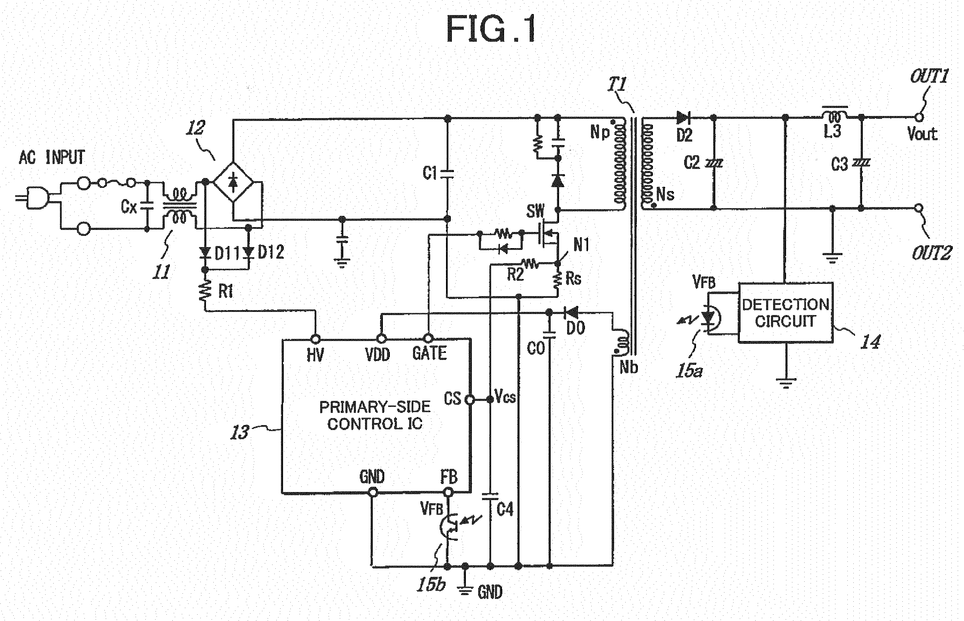

FIG. 1 is a circuit structure diagram illustrating one embodiment of an AC-DC converter corresponding to an insulated direct-current power supply device to which the present invention has been applied.

The AC-DC converter according to this embodiment includes: an X condenser Cx connected between AC input terminals for attenuating the normal-mode noise; a noise blocking line filter 11 including a common-mode coil and the like; a diode bridge circuit 12 that rectifies alternating-current voltage (AC) ; a smoothing condenser C1 that smooths the rectified voltage; a transformer T1 for voltage conversion including a primary-side winding wire Np, a secondary-side winding wire Ns, and an auxiliary winding wire Nb; a switching transistor SW including an N-channel MOSFET connected in series with the primary-side winding wire Np of this transformer T1; and a power supply control circuit 13 that drives the switching transistor SW. In this embodiment, the power supply control circuit 13 is formed as a semiconductor integrated circuit (hereinafter referred to as a power supply control IC) on one semiconductor chip formed of single-crystal silicon or the like.

On the secondary side of the transformer T1, a rectifying diode D2 connected in series with the secondary-side winding wire Ns and a smoothing condenser C2 connected between a cathode terminal of this diode D2 and the other terminal of the secondary-side winding wire Ns are provided. By supplying current intermittently to the primary-side winding wire Np, the alternating-current voltage is induced by the secondary-side winding wire Ns, and by rectifying and smoothing this induced alternating-current voltage, the direct-current voltage Vout in accordance with the winding wire ratio between the primary-side winding wire Np and the secondary-side winding wire Ns is output.

In addition, a coil L3 and a condenser C3 are provided on the secondary side of the transformer T1. The coil L3 and the condenser C3 form a filter for blocking the switching ripple noise and the like occurring in the switching operation on the primary side. Moreover, on the secondary side of the transformer T1, a detection circuit 14 for detecting the output voltage Vout andaphotodiode 15a as an emission-side element of a photocoupler are provided. The photodiode 15a is connected to the detection circuit 14 and transmits a signal in accordance with the detected voltage to the power supply control IC 13. Then, on the primary side, a photo transistor 15b is provided as a light-reception-side element. The phototransistor 15b is connected between a ground point and a feedback terminal FB of the power supply control IC 13 and receives a signal from the detection circuit 14.

On the primary side of the AC-DC converter according to this embodiment, a rectifying/smoothing circuit is provided. The rectifying/smoothing circuit includes a rectifying diode D0 connected in series with the auxiliary winding wire Nb, and a smoothing condenser C0 connected between the ground point GND and a cathode terminal of the diode D0. The voltage rectified and smoothed in the rectifying/smoothing circuit is applied to a power supply voltage terminal VDD of the power supply control IC 13.

On the other hand, the power supply control IC 13 includes a high-voltage input start terminal HV to which the voltage be fore being rectified in the diode bridge circuit 12 is applied through diodes D11 and D12 and a resistor R1. When the AC input is supplied (just after the plug is inserted), the power supply control IC 13 can operate based on the voltage from this high-voltage input start terminal HV.

In addition, in the present embodiment, the resistor Rs for current detection is connected between the ground point GND and the source terminal of the switching transistor SW and moreover a resistor R2 is connected between a current detection terminal CS of the power supply control IC 13 and a node N1 between the switching transistor SW and the current detection resistor Rs. Furthermore, a condenser C4 is connected between the ground point and the current detection terminal CS of the power supply control IC 13. The resistor R2 and the condenser C4 form a low-pass filter.

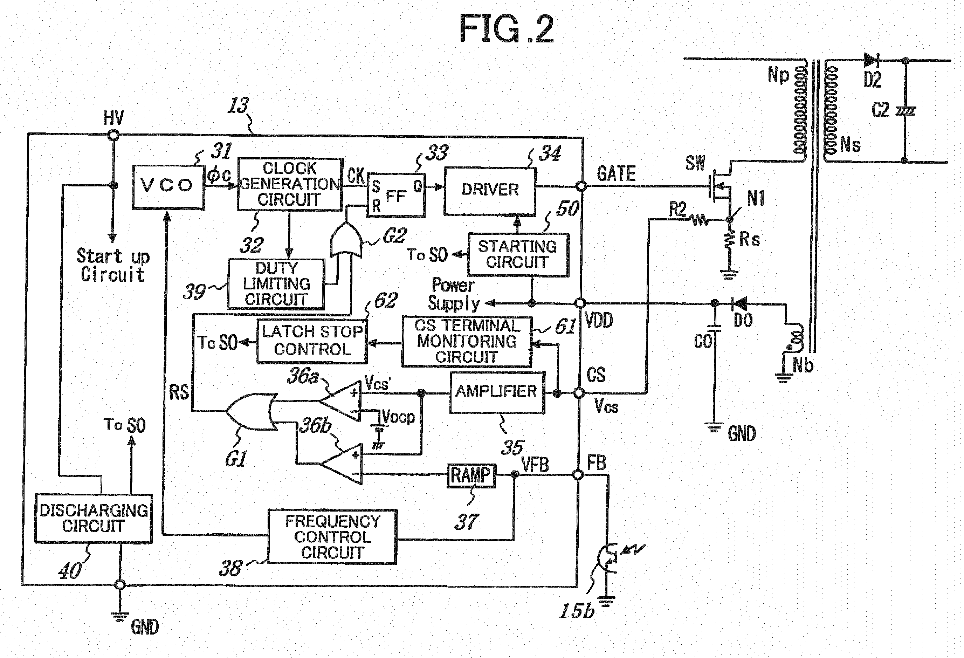

Next, with reference to FIG. 2, a specific structure example of the power supply control IC 13 is described.

As illustrated in FIG. 2, the power supply control IC 13 according to this example includes: an oscillation circuit 31 that oscillates at the frequency in accordance with the voltage VFB of the feedback terminal FB; a clock generation circuit 32 including a circuit like a one-shot pulse generation circuit that generates a clock signal CK for providing the timing to turn on the primary-side switching transistor SW on the basis of an oscillation signal φc generated in the oscillation circuit 31; an RS/flip-flop 33 that is set by the clock signal CK; and a driver (a driving circuit) 34 that generates a driving pulse GATE of the switching transistor SW in accordance with the output of the flip-flop 33.

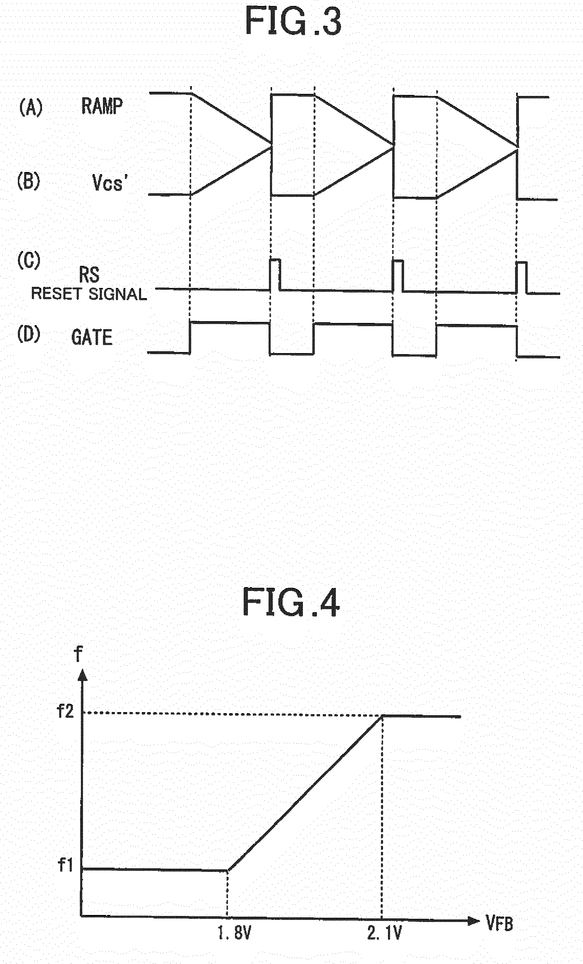

Moreover, the power supply control IC 13 includes: an amplifier 35 that amplifies the voltage Vcs input to the current detection terminal CS; a comparator 36a as a voltage comparison circuit that compares the voltage Vcs' amplified by the amplifier 35 with a comparison voltage (threshold voltage) Vocp for monitoring the over-current state; a waveform generation circuit 37 that generates a voltage RAMP with a predetermined waveform as illustrated in FIG. 3 (A) on the basis of the voltage VFB of the feedback terminal FB; a comparator 36b that compares a potential Vcs' with a waveform as illustrated in FIG. 3 (B) that is amplified by the amplifier 35 and a waveform RAMP generated by the waveform generation circuit 37; and an OR gate G1 that implements the OR operation of the outputs of the comparators 36a and 36b. In the power supply control IC 13 according to the present example, the voltage RAMP in FIG. 3 (A) is generated so as to decrease from the feedback voltage VFB with a constant inclination.

The power supply control IC 13 is configured so that when the output RS of the OR gate G1 (see FIG. 3 (C)) is input to the reset terminal of the flip-flop 33 through the OR gate G2, the timing to turn off the switching transistor SW is provided. Note that a pull-up resistor is provided between the feedback terminal FB and the internal power supply voltage terminal, and the current flowing in the phototransistor 15b is converted into the voltage by the resistor. The waveform generation circuit 37 is provided in order to deal with the sub-harmonic oscillation, and another structure may alternatively be employed in which the voltage VFB is input to the comparator 36b directly or after being level-shifted.

Furthermore, the power supply control IC 13 according to the present example includes a frequency control circuit 38 that changes the oscillation frequency, that is, the switching frequencyof the oscillation circuit 31 on the basis of the voltage VFB of the feedback terminal FB in accordance with the characteristic as illustrated in FIG. 4. The frequency f1 in FIG. 4 is set to a value of, for example, 22 kHz and the frequency f2 is set to an arbitrary value in the range of, for example, 66 kHz to 100 kHz. The frequency control circuit 38 maybe formed of a buffer such as a voltage follower and a clamp circuit. When the voltage of the feedback terminal FB is, for example, 1.8 V or less, the clamp circuit clamps the voltage to 1.8 V, and when the voltage is 2.1 V or more, the clamp circuit clamps the voltage thereof to 2.1 V. Although not shown in the drawings, the oscillation circuit 31 includes an oscillator which is provided with a current source that supplies current in accordance with the voltage from the frequency control circuit 38 and whose oscillation frequency changes depending on the amount of current supplied from the current source.

The power supply control IC 13 according to the present example includes a duty limiting circuit 39 that generates a maximum duty reset signal for limiting the duty (Ton/Tcycle) of the driving pulse GATE so that the duty does not exceed a prescribed maximum value (for example, 85% to 90%) on the basis of the clock signal CK output from the clock generation circuit 32. The maximum duty reset signal output from the duty limiting circuit 39 is supplied to the flip-flop 33 through the OR gate G2 and when the pulse has reached the maximum duty, the duty is reset at that time; thus, the switching transistor SW is turned off immediately.

The power supply control IC 13 according to the present example includes a CS terminal monitoring circuit 61 and a latch stop control circuit 62. The CS terminal monitoring circuit 61 detects the abnormality (opening) of the CS terminal by monitoring the voltage Vcs of the current detection terminal CS.

When the CS terminal monitoring circuit 61 has detected the abnormality (opening) of the current detection terminal CS, the output of the CS terminal monitoring circuit 61 changes into the high level to stop the operation of the driver (driving circuit) 34, so that the driving pulse GATE output from the driver 34 is fixed to the low level (turn off SW). Instead of stopping the operation of the driver 34 by the output of the CS terminal monitoring circuit 61, the flip-flop 33 in front of the driver 34 may be reset to fix the output Q thereof to the low level so that the driving pulse GATE is fixed to the low level.

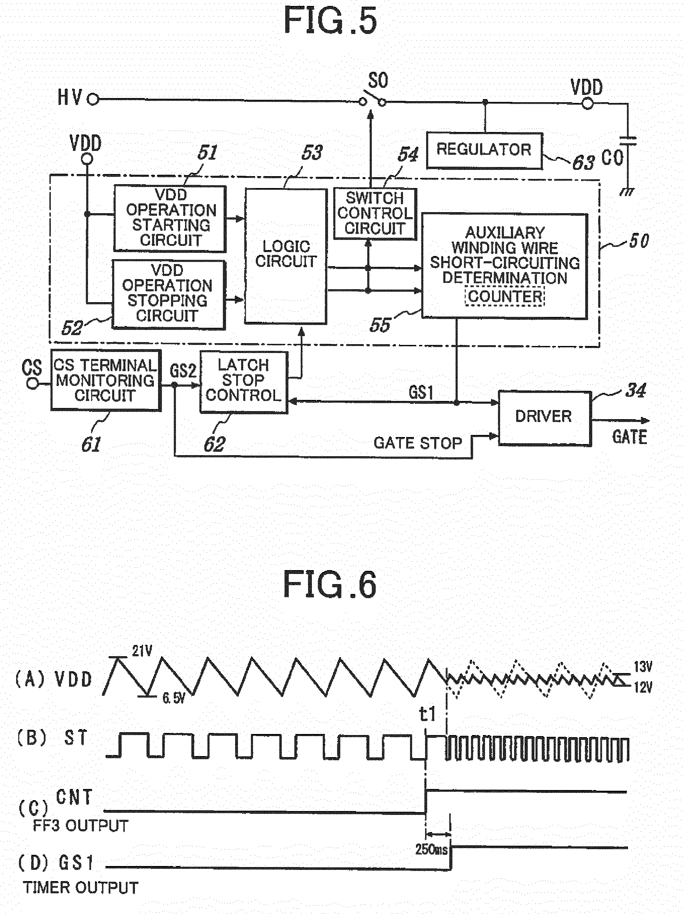

The latch stop is the function for preventing the power supply control IC 13 from restarting, by turning on and off the switch S0 (see FIG. 5) provided between the high-voltage input start terminal HV of the IC and the power supply voltage terminal VDD in a relatively short cycle to suppress the voltage of the power supply voltage terminal VDD to be in the voltage range of, for example, 12 V to 13 V. The latch stop control circuit 62 is configured to perform the control operation as described above by comparing the voltage of the power supply voltage terminal VDD with a predetermined voltage (12 V, 13 V). Specifically, the switch S0 is turned on when the voltage of the power supply voltage terminal VDD has decreased to 12 V, and the switch S0 is turned off when the voltage of the VDD has increased to 13 V; this operation is repeated.

Without such a latch stop function, if the CS terminal monitoring circuit 61 detects the opening of the CS terminal and stops the operation of the driver 34, current stops to flow in the auxiliary winding wire and the voltage of the power supply voltage terminal VDD decreases; however, if the voltage of the power supply voltage terminal VDD has become less than or equal to an operation stop voltage value (for example, 6.5 V) of the IC, a starting circuit (start circuit) 50 to be described below operates to turn on the switch S0 and restart the IC, so that the switching control is started again.

Inviewofthis, in the present example, when the CS terminal monitoring circuit 61 has detected the opening of the CS terminal, the operation of the driver 34 is stopped and moreover the latch stop control circuit 62 is operated to shift the power supply control IC 13 to the latch stop mode, and thus the irrational operation as above is avoided.

Note that the latch stop mode is canceled when the plug on the AC power supply side is pulled out of the outlet.

Furthermore, the power supply control IC 13 according to the present example includes the starting circuit (start circuit) 50 and a discharging circuit 40. The starting circuit 50 is connected to the high-voltage input start terminal HV, and when the voltage of this terminal is input, turns on the switch S0 (see FIG. 5), which is connected between the high-voltage input start terminal HV and the power supply voltage terminal VDD, to start the IC. The discharging circuit 40 detects whether the plug of the AC power supply is off from the outlet by monitoring the voltage of the high-voltage input start terminal HV and if it has been determined that the plug is off, discharges the X condenser Cx.

Whether the plug is off, for example, can be determined by detecting whether the AC input voltage decreases below a predetermined value (for example, 30% of peak value) within a certain time (for example, 30 ms). Since the discharging circuit 40 connected to the high-voltage input start terminal HV is incorporated in the power supply control IC 13, the charges remaining in the X condenser can be discharged quickly when the plug is pulled out, without increasing the number of external terminals, that is, without increasing the chip size largely.

When the AC input is supplied, the starting circuit 50 turns on the switch S0 to supply current to the capacitor (condenser) C0 connected to the power supply terminal VDD from the high-voltage input start terminal HV, so that the voltage is supplied to the power supply terminal VDD. Then, when the voltage charged in the capacitor has reached 21 V, the switch S0 is turned off to block the current and the operation of the internal regulator is started to operate the IC. In addition, the starting circuit 50 has a function of monitoring the voltage of the power supply voltage terminal VDD and turning on the switch S0 when the voltage has decreased to, for example, 6.5 V. When the switch S0 is turned on, current is supplied from the high-voltage input start terminal HV to the capacitor (condenser) C0 connected to the power supply terminal VDD like when the AC input is supplied, so that the voltage is supplied to the power supply terminal VDD. When the voltage of the power supply terminal VDD has reached 21 V, the switch S0 is turned off to block current and the internal regulator starts to operate (in this specification, this is called the restarting operation) . In addition, the power supply control IC 13 according to the present example has the auxiliary winding wire short-circuiting determination function. Upon determining the short-circuiting of the auxiliary winding wire, the power supply control IC 13 stops the operation of the driver 34 (stops the gate) and operates the latch stop control circuit 62.

FIG. 5 illustrates a structure example of the starting circuit 50 including the auxiliary winding wire short-circuiting determination function.

As illustrated in FIG. 5, the starting circuit 50 includes: a VDD operation starting circuit 51 that always monitors the voltage of the power supply voltage terminal VDD and if the voltage has reached 21 V, for example, turns off the switch S0 and causes the regulator 63 to start the operation to generate the internal power supply voltage Vreg; and a VDD operation stopping circuit 52 that, if the VDD has decreased to 6.5V, for example, turns on the switch S0 and stops the operation of the regulator 63 to generate the internal power supply voltage Vreg.

In addition, the starting circuit 50 includes: a logic circuit 53 that generates a start control signal ST to turn on or off the switch S0 in accordance with, for example, output signals from the VDD operation starting circuit 51 and the VDD operation stopping circuit 52; and a switch control circuit 54 to turn on or off the switch S0 by the start control signal (pulse) ST from the logic circuit 53.

A control signal (enable signal) for operating or stopping the regulator 63 is supplied to the regulator 63 through the logic unit 53. It is necessary that the VDD operation starting circuit 51, the VDD operation stopping circuit 52, the logic circuit 53, and the latch stop control circuit 62 are operable even during the non-operation of the regulator 63. This can be achieved when these circuits are formed of an element with high withstand voltage so that the circuits can be directly operated based on the voltage of the power supplyvoltage terminal VDD. Note that the depression type MOS transistor constituting the switch S0 is formed of the element with a withstand voltage as high as 700 V.

The switch S0 is formed of the depression type MOS transistor. Therefore, when the AC input is supplied, the switch S0 is on and is turned off when the voltage of the power supply voltage terminal VDD has reached 21 V. While the switch S0 is on, the condenser C0 connected to the power supply voltage terminal VDD is charged; therefore, even after the switch S0 is turned of f , the charges in the condenser C0 causes the regulator 63 to generate the internal power supply voltage Vreg and thus the internal circuit starts to operate. If the power supply device is normal, the start of the operation of the internal circuit triggers the switching control and if the current is supplied from the auxiliary winding wire to the power supply voltage terminal VDD, the internal circuit continues to operate. On the other hand, if the current is not supplied from the auxiliary winding wire to the power supply voltage terminal VDD due to the abnormality such as the short-circuiting of the auxiliary winding wire, the voltage of the power supply voltage terminal VDD starts to decrease because the current is consumed. When the voltage has decreased to 6.5 V, the switch S0 is turned on and the operation as above is repeated.

In addition, the starting circuit 50 includes an auxiliary winding wire short-circuiting determination circuit 55. The auxiliary winding wire short-circuiting determination circuit 55 includes a counter CNT that counts the number of pulses of start control signals ST, and determines the occurrence of the short-circuiting of the auxiliary winding wire when the counter CNT counts a predetermined number of pulses. When the auxiliary winding wire short-circuiting determination circuit 55 has detected the short-circuiting of the auxiliary winding wire, a gate stop signal GS1 for stopping the operation of the driver (driving circuit) 34 is generated and the output thereof, that is, the driving pulse GATE is fixed to the low level (turn off the SW). As a result, the current stops flowing in the primary-side winding wire of the transformer, so that the operation of the power supply device stops safely.

Moreover, this gate stop signal GS1 is supplied to the latch stop control circuit 62 to operate the latch stop control circuit 62.

In addition, a control signal LC is input from the latch stop control circuit 62 to the logic circuit 53 of the starting circuit 50, and by this control signal LC, the switch control circuit 54 is operated to turn on or off the switch S0. Thus, the operation is performed so that the voltage of the power supply voltage terminal VDD is suppressed to be in the range of, for example, 12 V to 13 V.

As described above, the latch stop control circuit 62 has a function of suppressing the voltage of the power supply voltage terminal VDD to be in the voltage range of, for example, 12 V to 13 V by comparing the voltage of the power supply voltage terminal VDD with a predetermined voltage (12 V, 13 V) and turning on or off the switch S0. Therefore, by operating the latch stop control circuit 62 even when the auxiliary winding wire short-circuiting determination circuit 55 has detected the short-circuiting of the auxiliary winding wire, the latch stop control is executed before the restarting operation of the power supply control IC 13 in which the logic circuit 53 turns on or off the switch S0 by the outputs from the VDD operation starting circuit 51 and the VDD operation stopping circuit 52. Thus, the restarting operation can be avoided.

If the short-circuiting occurs in the auxiliary winding wire in the conventional power supply control IC that does not include the auxiliary winding wire short-circuiting determination circuit 55, the voltage of the power supply voltage terminal VDD largely varies in the voltage range of, for example, 6.5 V to 21 V as shown by a dashed line in FIG. 6 (A) due to the restarting operation of the starting circuit 50. In the power supply control IC according to the present example including the auxiliary winding wire short-circuiting determination circuit 55, however, the latch stop control circuit 62 operates after the timing t1 when eight pulses of start control signals ST are counted; thus, as shown by a solid line in FIG. 6(A), the voltage of the power supply voltage terminal VDD can be suppressed to be in the relatively narrow voltage range of, for example, 12 V to 13 V.

In the restarting operation, the operation may be performed with the voltage of the power supply voltage terminal VDD in the voltage range of, for example, 6. 5 V to 21 V and the switching control may be executed; on the other hand, in the latch stop control, the voltage of the power supply voltage terminal VDD is suppressed to be in the voltage range of, for example, 12 V to 13 V, so that the restarting operation is avoided. Therefore, even in the occurrence of the short-circuiting of the auxiliary winding wire, the power supply device is not restarted and can remain stopped safely.

In the present example, the CS terminal monitoring circuit 61 is provided as described above, and even if the CS terminal is opened, the operation of the driver 34 is stopped and the latch stop control is executed. Therefore, the restarting of the power supply device by the restarting operation of the power supply control IC is avoided and the device can remain stopped safely.

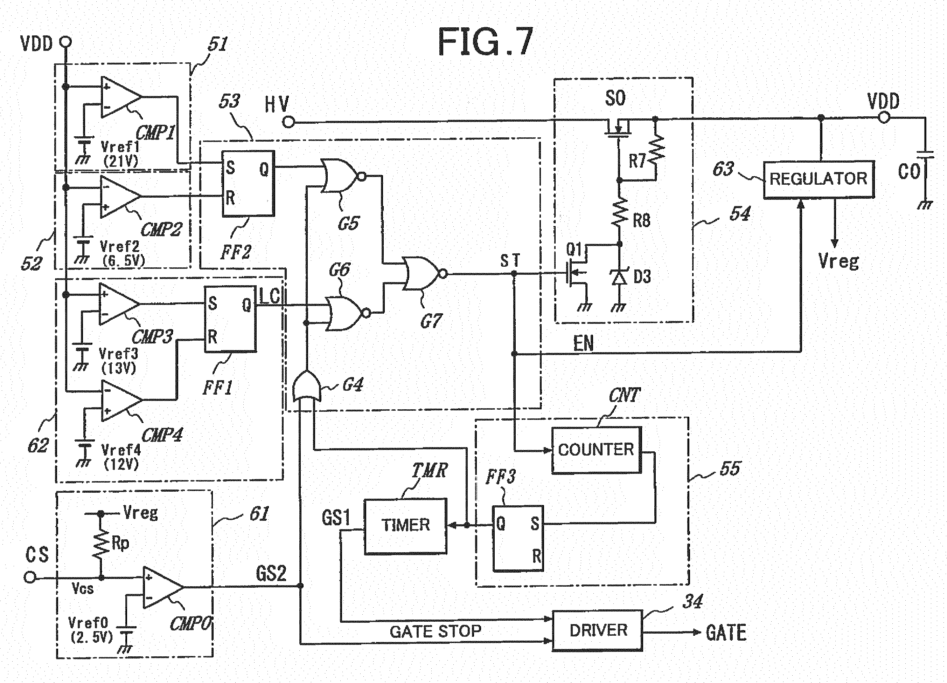

FIG. 7 illustrates a specific example of the starting circuit 50 of FIG. 5. In the present example, the circuit illustrated in FIG. 7 is formed of an element with a withstand voltage of 30 V though the circuit is not limited to the particular element.

As illustrated in FIG. 7, the VDD operation starting circuit 51 and the VDD operation stopping circuit 52 included in the starting circuit 50 are respectively formed of comparators CMP1 and CMP2. The voltage of the power supply voltage terminal VDD is applied to one input terminal of each of the comparators CMP1 and CMP2, and comparison reference voltages Vref1 and Vref2 of 21 V and 6.5V are respectively applied to the other terminals of the comparators CMP1 and CMP2.

Moreover, the latch stop control circuit 62 can be formed of comparators CMP3 andCMP4 andanRS flip-flop FF1. The voltage of the power supply voltage terminal VDD is applied to one input terminal of each of the comparators CMP3 and CMP4, and comparison reference voltages Vref3 andVref4 of 13 V and 12 V are respectively applied to the other terminals of comparators CMP3 and CMP4. The output of the comparator CMP3 is input to the set terminal of the RS flip-flop FF1 and the output of the comparator CMP4 is input to the reset terminal of the RS flip-flop FF1.

The CS terminal monitoring circuit 61 includes a pull-up resistor Rp connected between the current detection terminal CS and the power supply line that supplies the internal power supply voltage Vreg, and a comparator CMP0 whose non-inversion input terminal is connected to the current detection terminal CS and whose inversion input terminal receives a detection voltage Vref0 (for example, 2.5V). If the opening abnormality occurs in the current detection terminal CS, the voltage Vcs of the terminal increases up to Vreg so that the output of the comparator CMP0 changes into the high level and the gate signal GS2 that stops the operation of the driver 34 is output. This gate signal GS2 is supplied to the logic circuit 53 and the output of the latch stop control circuit 62 is enabled. Note that the pull-up resistor Rp of the CS terminal monitoring circuit 61 may be replaced by a constant-current source.

The logic circuit 53 includes: an RS flip-flop FF2 whose set terminal and reset terminal respectively receive the outputs of the comparators CMP1 and CMP2 respectively included in the VDD operation starting circuit 51 and the VDD operation stopping circuit 52; an OR gate G4 that receives the output of the CS terminal monitoring circuit 61 and the output GS of the auxiliary winding wire short-circuiting determination circuit 55; a NOR gate G5 that receives the output of the OR gate G4 and the output of the flip-flop FF2; a NOR gate G6 that receives the output of the OR gate G4 and the output of the flip-flop FF1 included in the latch stop control circuit 62; and a NOR gate G7 that receives the output of the NOR gate G6 and the output of the NOR gate G5. The output signal ST of this NOR gate G7 is supplied as the clock pulse to the counter CNT included in the auxiliary winding wire short-circuiting determination circuit 55 and also supplied as an enable signal EN to the regulator 63.

The auxiliary winding wire short-circuiting determination circuit 55 includes: a counter CNT that counts the number of pulses of the output signals ST of the logic circuit 53; an RS flip-flop FF3 whose set terminal receives the output of the counter CNT; and a timer circuit TMR that delays the change of the output of the flip-flop FF3 by a predetermined time (250 ms) . The output of the flip-flop FF3 is supplied to the OR gate G4 of the logic circuit 53, and moreover the output of the timer circuit TMR is supplied to the driver 34 as the gate stop signal GS1. When the counter CNT has counted eight pulses, it is determined that the auxiliary winding wire is short-circuited and the output thereof is changed to the low level. Note that the number of pulses counted by the counter CNT is not limited to eight, and the timer circuit TMR may be omitted.

The switch control circuit 54 includes: the switch S0 for power supply, which is formed of a depression type MOS transistor with high withstand voltage and providedbetween the high-vol tage input start terminal HV and the power supply voltage terminal VDD; resistors R7 and R8 and an enhancement type MOS transistor Q1 which are connected in series between the power supply voltage terminal VDD and the ground point; and a Zener diode D3 for clamping which is provided in parallel to the transistor Q1. A connection node between the resistors R7 and R8 is connected to the gate terminal corresponding to a control terminal of the switch S0.

The output ST of the NOR gate G7 lastly positioned in the logic circuit 53 is applied to the gate terminal of the MOS transistor Q1, and by turning on Q1, voltage that is negative relative to the source voltage is applied to the gate terminal of the switch S0 corresponding to the depression type MOS transistor, so that the channel can be set to the non-conductive state (state in which the drain current does not flow). As described above, when the voltage of the power supply voltage terminal VDD has reached 21 V, the starting circuit 50 turns off the switch S0 and the regulator 63 is operated to generate the internal power supply voltage Vreg. On the other hand, when the transistor Q1 of the switch control circuit 54 is turned off, the switch S0 is turned on and the operation of the regulator 63 is stopped. Note that when the switch S0 is turned on, current is supplied from the high-voltage input start terminal HV to charge the externally attached condenser C0 connected to the VDD terminal, the voltage of the power supply voltage terminal VDD is increased and when the voltage has reached 21 V, the output of the comparator CMP1 changes into the high level and the transistor Q1 is turned on and the switch S0 is turned off.

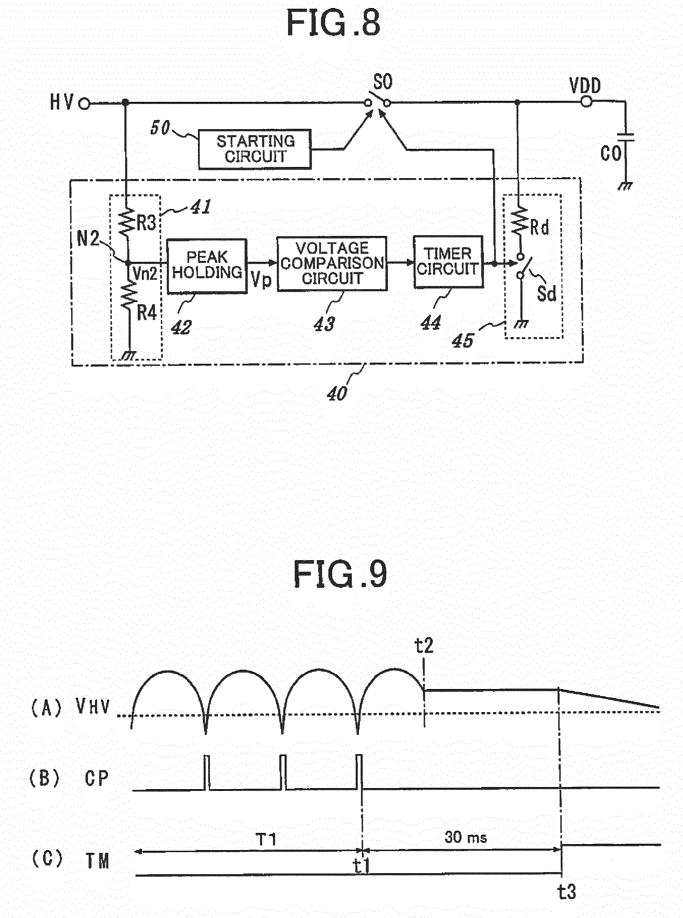

FIG. 8 illustrates a structure example of the discharging circuit 40 (see FIG. 2) in the power supply control IC according to the present embodiment.

As illustrated in FIG. 8, the discharging circuit 40 includes: a voltage dividing circuit 41 including resistors R3 and R4 that are connected in series between the high-voltage input start terminal HV and the ground point; a peak holding circuit 42 that holds the peak value of the voltage divided by the voltage dividing circuit 41; a voltage comparison circuit 43 that compares a potential Vn2 at a connection node N2 between the resistors R3 and R4 with a voltage Vth, which is obtained by proportionally reducing a voltage Vp held in the peak holding circuit 42 and determines whether Vn2 is lower than Vth; a timer circuit 44 that measures the time when Vn2 is not lower than Vth; and a discharging means 45 including a resistor Rd and a switch Sd that are connected so as to be in series with the switch S0 between the high-voltage input start terminal HV and the ground point.

Here, the switch S0 is a switch connected between the high-voltage input start terminal HV and the power supply voltage terminal VDD, and controlled by the starting circuit 50. For example, the switch S0 is formed of a MOS transistor with high withstand voltage. The switch S0 is turned on immediately after the AC power supply is started, and when the voltage has become a predetermined value (for example, 21 V) or more, the switch S0 is turned off and the internal circuit starts to operate. Then, after that, the voltage from the auxiliary winding wire is supplied to the power supply voltage terminal VDD and the internal circuit operates by the voltage from the power supply voltage terminal VDD while the switch S0 remains off.

The ratio between the resistance values of the resistors R3 and R4 is set so that the voltage of the high-voltage input start terminal HV becomes the voltage (for example, 6 V) that is less than or equal to the withstand voltage of the element included in the discharging circuit 40.

The voltage comparison circuit 43 compares the potential Vn2 at the connection node N2 with the value of 30% of the peak value of the potential Vn2 at the connection node N2, and detects whether Vn2 is lower than the value of 30% of the peak value of the potential Vn2. The timer circuit 44 measures how long Vn2 is not lower than Vp and if it has been determined that the measured time is more than 30 ms, for example, the timer circuit 44 outputs the signal for turning on the switch S0 and the discharging switch Sd. The resistance value of the resistor Rd is set to the resistance value at which the current is limited so that the discharging speed becomes 47 V/s, for example. The timer circuit 44 is configured to be reset every time Vn2 becomes lower than Vp and starts to measure 30 ms.

FIG. 9 expresses the operation timing of the discharging circuit 40 illustrated in FIG. 8. In FIG. 9, the solid line of (A) expresses the waveform of the voltage VHV of the high-voltage input start terminal HV and the dashed line expresses the value of 30% of the peak value. In FIG. 9(B), the output CP of the voltage comparison circuit 43 is expressed and in FIG. 9(C), the output TM of the timer circuit 44 is expressed.

As illustrated in FIG. 9, in the normal period T1, the pulses CP are output in the cycle corresponding to the cycle of the voltage waveform of the high-voltage input start terminal HV. If the plug is pulled out at the timing t2, the voltage comparison circuit 43 no longer outputs the pulses CP. Then, at the time t3 when 30 ms have passed from the output time t1 at which the last pulse is output, the output TM of the timer circuit 44 changes into the high level and the discharging switch Sd is turned on to discharge the X condenser, and the voltage VHV of the high-voltage input start terminal HV decreases quickly.

In this manner, in the power supply control IC including the discharging circuit 40 as illustrated in FIG. 8, the charges remaining in the X condenser can be released quickly if the AC input is blocked as can be seen from FIG. 9, and in the normal operation state, the starting circuit 50 turns off the switch S0 for power supply; therefore, the power loss due to the discharging resistor Rd can be avoided. Note that the power loss occurs always in the voltage dividing circuit 41, but the resistance value of the discharging resistor Rd is regarded as being necessary to define the discharging speed; on the other hand, the resistance values of the resistors R3 and R4 in the voltage dividing circuit 41 can be set to the resistance value that is sufficiently higher than that of the discharging resistor Rd. Thus, as the whole discharging circuit 40, the power loss can be reduced as compared to before.

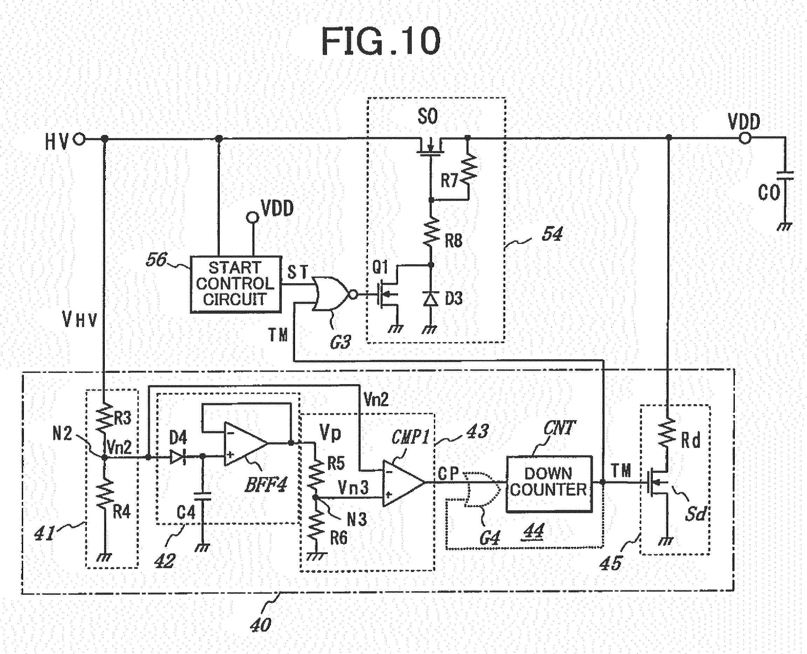

FIG. 10 illustrates a specific circuit structure example of the discharging circuit 40 in FIG. 8 included in the power supply control IC 13 according to the present embodiment. Note that a start control circuit 56 illustrated in FIG. 10 is a circuit combining the VDD operation starting circuit 51, the VDD operation stopping circuit 52, the logic circuit 53, and the auxiliary winding wire short-circuiting determination circuit 55 illustrated in FIG. 7. Therefore, the combination of the switch control circuit 54 and the start control circuit 56 corresponds to the starting circuit 50.

As illustrated in FIG. 10, the discharging circuit 40 includes the voltage dividing circuit 41, the peak holding circuit 42, the voltage comparison circuit 43, the timer circuit 44, and the discharging means 45. Among these circuits, the peak holding circuit 42 includes a diode D4 whose anode terminal is connected to the connection node N2, a capacitor element C4 connected between a cathode terminal of the diode D4 and the ground point, a buffer BFF4 including a voltage follower whose input terminal is connected to a connection node N3 between the diode D4 and the capacitor element C4.

The voltage comparison circuit 43 includes: resistors R5 and R6 for voltage division that are connected in series between the ground point and the output terminal of the BFF4; and the comparator CMP1 that compares the voltage (a potential Vn3 at the connection node N3) divided by the resistors R5 and R6 with the voltage (the potential Vn2 at the connection node N2) divided by the voltage dividing circuit 41. By setting so that the resistors R5 and R6 have a resistance ratio of 2 : 1, the voltage of 1/3 of the peak voltage held by the capacitor element C4 appears at the connection node N3. This enables the comparator CMP1 to detect whether the potential Vn2 at the connection node N2 is lower than the value approximately 30% of the peak value thereof.

The timer circuit 44 includes a down counter CNT that performs counting by a clock signal φc from an oscillation circuit 31, and its output changes to the high level when the timer circuit 44 has counted the clocks corresponding to 30 ms. In addition, the output of the comparator CMP1 is input to the reset terminal of the down counter CNT, and the down counter CNT restarts the operation of counting 30 ms every time the output pulse of the comparator CMP1 is input.

Usually, the pulse CP from the comparator CMP1 is input before 30 ms passes and therefore the output does not change, but once the plug is pulled out and the reset pulse CP is no longer input from the comparator CMP1, the output of the down counter CNT changes into the high level when 30 ms has passed and by that output, the discharging switch Sd is turned on.

In addition, in the present example, the output signal of the NOR gate G3 that implements the OR operation of the signal ST from the start control circuit 56 and the signal TM from the timer circuit 44 of the discharging circuit 40 is applied to the gate terminal of the MOS transistor Q1 of the switch control circuit 54. When the discharging switch Sd is turned on, Q1 is turned off and the MOS transistor as the switch S0 for power supply is turned on. The start control circuit 56 incorporates the voltage comparator as described above, and operates so that when the voltage of the power supply voltage terminal VDD is less than or equal to, for example, 6.5 V, the switch S0 is turned on and when the voltage of the VDD is more than or equal to, for example, 21 V, the switch S0 is turned off.

In the present example, the switch S0 for power supply is formed of the depression type MOS transistor with the high withstand voltage, while the discharging switch Sd can be formed of the enhancement type MOS transistor with the middle withstand voltage.

Note that as expressed by a dashed line in FIG. 10, the logic circuit such as the OR gate G4 is provided in front of the reset terminal of the down counter CNT and the signal obtained by implementing the OR operation of the output of the comparator CMP1 and the output of the down counter CNT is input to the reset terminal of the down counter CNT. Once the output of the down counter CNT changes into the high level, the time measuring operation of the down counter CNT may be stopped.

The discharging resistor Rd may be replaced by a constant-current circuit and the order of connecting the discharging resistor Rd or the constant-current circuit and the discharging switch Sd may be opposite.

The invention made by the present inventor has been described specifically based on the embodiment; however, the present invention is not limited by the embodiment. For example, in the above embodiment, the auxiliary winding wire short-circuiting determination circuit 55 and the CS terminal monitoring circuit 61 are provided and the latch stop control is performed both for detecting the short-circuiting of the auxiliary winding wire and detecting the opening of the CS terminal. However, the function of detecting the opening of the CS terminal may be omitted and the latch stop control may be performed only to detect the short-circuiting of the auxiliary winding wire. Further, a soft start circuit may be provided which generates a signal for resetting the flip-flop 33 so as to increase the primary-side current gradually to prevent the excess current from flowing in the primary-side winding wire when the AC input is supplied and the significant voltage VFB or Vcs is not generated in the feedback terminal FB or the current detection terminal CS.

In addition, in the embodiment, the switching transistor SW that supplies current intermittently to the primary-side winding wire of the transformer is an element separated from the power supply control IC 13, but this switching transistor SW may be taken into the power supply control IC 13 to form one semiconductor integrated circuit.

### INDUSTRIAL APPLICAPABLITY

In the description of the above embodiment, the present invention is applied to the power supply control IC that forms a flyback type AC-DC converter. However, the present invention is also applicable to a power supply control IC that forms a forward type or a quasi-resonance type AC-DC converter and moreover so-called a primary side regulation (hereinafter, PSR) type AC-DC converter that controls the output voltage on the secondary side just by the information acquired on the primary side.

### REFERNCE SIGNS LIST

11 line filter
12 diode bridge circuit (rectification circuit)
13 power supply control circuit (power supply control IC)
14 secondary-side detection circuit (detection IC)
15a diode on emission side of photocoupler
15b transistor on light reception side of photocoupler
31 oscillation circuit
32 clock generation circuit
34 driver (driving circuit)
35 amplifier (non-inversion amplification circuit)
36a comparator for over-current detection (over-current detection circuit)
36b comparator for voltage/current control (voltage/current control circuit)
36c comparator for detecting the opening of the CS terminal (terminal voltage monitoring circuit)
37 waveform generation circuit
38 frequency control circuit
39 duty limiting circuit
40 discharging circuit
42 latch stop control circuit (state control circuit)
43 regulator
50 starting circuit
61 CS terminal monitoring circuit

## Claims

1. A semiconductor device for power supply control that generates and outputs a driving pulse for controlling turning on or off of a switching element, which supplies current intermittently to a primary-side winding wire of a transformer for voltage conversion, by an input of voltage in proportion to the current flowing in the primary-side winding wire of the transformer and an output voltage detection signal from a secondary side of the transformer, the semiconductor device comprising:
an on/off control signal generation circuit which generates a control signal for controlling turning on or off of the switching element;
a high-voltage input start terminal to which voltage of AC input is input;
a power supply terminal to which voltage induced by an auxiliary winding wire of the transformer is input;
a switching means provided between the high-voltage input start terminal and the power supply terminal;
a power supply voltage control circuit which monitors voltage of the power supply terminal and performs controlling to turn on of the switching means when the voltage is less than or equal to a first voltage value that is predetermined, and performs controlling to turn off of the switching means when the voltage of the power supply terminal has reached a second voltage value higher than the first voltage value;
a state control circuit which controls turning on or off of the switching means on the basis of the voltage of the power supply terminal so that the voltage of the power supply terminal comes in a voltage range narrower than a voltage range from the first voltage value to the second voltage value; and
an auxiliary winding wire short-circuiting detection circuit which detects a short-circuiting of the auxiliary winding wire, wherein
when the auxiliary winding wire short-circuiting detection circuit has detected the short-circuiting of the auxiliary winding wire, by a signal output from the auxiliary winding wire short-circuiting detection circuit, an operation of the on/off control signal generation circuit is stopped and the state control circuit is set to an operation state.

2. The semiconductor device for power supply control according to claim 1, wherein the auxiliary winding wire short-circuiting detection circuit monitors an on/off control signal of the switching means output from the power supply voltage control circuit and determines that the auxiliary winding wire is short-circuited when the switching means repeats an on/off operation successively a predetermined number of times.

3. The semiconductor device for power supply control according to claim 1 or 2, comprising:
a high-voltage input monitoring circuit which is connected to the high-voltage input start terminal and monitors voltage of the high-voltage input start terminal; and
a discharging means which is connected in series with the switching means between the high-voltage input start terminal and a ground point, wherein
when the high-voltage input monitoring circuit has detected that a time for which the voltage of the high-voltage input start terminal is not lower than a predetermined voltage valuecontinuedforapredeterminedperiod, the discharging means is turned on.

4. The semiconductor device for power supply control according to any one of claims 1 to 3, comprising:
a current detection terminal to which voltage in proportion to the current flowing in the primary-side winding wire of the transformer is input; and
a current abnormality detection circuit which detects an abnormal state by monitoring a state of the current detection terminal, wherein
when the abnormality detection circuit has detected an abnormality of the current detection terminal, by a signal output from the abnormality detection circuit, a signal generation operation of the on/off control signal generation circuit is stopped and the state control circuit is set to an operation state.
